# EUROPEAN PATENT SPECIFICATION

(11) **EP 1 196 424 B1**
(45) Date of publication and mention of the grant of the patent: **18.06.2003**
(21) Application number: 00932220.7
(22) Date of filing: 10.05.2000
(51) Int. Cl.: C07F 17/00, C08F 10/00

(54) **DIMERIC GROUP 4 METALLOCENES IN +3 OXIDATION STATE**
DIMERE GRUPPE-4 METALLOCENE IN +3 OXIDATIONSSTUFE
METALLOCENES DIMERES DU GROUPE 4 DANS L'ETAT D'OXYDATION +3

(30) Priority: 07.06.1999 US 137881 P
(43) Date of publication of application: 17.04.2002
(73) Proprietor: Dow Global Technologies Inc., Midland, Michigan 48674 (US)
(72) Inventor: CHEN, Eugene, Y., Fort Collins, Colorado 80521 (US); DEVORE, David, D., Midland, MI 48642 (US)
(74) Representative: Burford, Anthony Frederick
(86) International application number: US0012680
(87) International publication number: WO00075152

(56) References cited:
- US-A- 5 616 748
- CHEMICAL ABSTRACTS, vol. 70, no. 14, 7 April 1969 (1969-04-07) Columbus, Ohio, US; abstract no. 58391, AZUMA, KEIICHI ET AL: ".alpha.- Olefin catalytic polymerization or copolymerization" XP002143579 & JP 43 013048 B (TOKUYAMA SODA CO., LTD.) 3 June 1968 (1968-06-03)
- HITCHCOCK, PETER B. ET AL: "Lipophilic halozirconocene(III) complexes: [{Zr[.eta.-C5H3(SiMe3)2- 1,3]2(.mu.-Cl)}2], [NBun4][Zr{.eta.-C5H3(SiMe3)2-1,3}2Cl2] and [Zr{.eta.-C5H3(SiMe3)2-1,3}2Cl2]" J. CHEM. SOC., CHEM. COMMUN. (1992), (6), 474-6 , 1992, XP002143578
- CHEMICAL ABSTRACTS, vol. 112, no. 15, 9 April 1990 (1990-04-09) Columbus, Ohio, US; abstract no. 139280, ANTINOLO, ANTONIO ET AL: "Aspects of the chemistry of a bulky zirconocene(III) chloride" XP002143580 & POLYHEDRON (1989), 8(13-14), 1882 , 1989,
- CHEMICAL ABSTRACTS, vol. 111, no. 22, 27 November 1989 (1989-11-27) Columbus, Ohio, US; abstract no. 203858, KUCHARENKO, S. V. ET AL: "Low-temperature voltammetric study of the mechanism of reduction of metallocene dichloride complex of Group IVB metals with formation of metastable metallocenes" XP002143581 & METALLOORG. KHIM. (1989), 2(2), 395-403 , 1989,

## Description

The present invention relates to compounds that are useful as catalysts or catalyst components. More particularly, the present invention relates to such compounds comprising two Group 4 metal atoms in the +3 formal oxidation state that are particularly adapted for use in the coordination polymerization of unsaturated compounds. Such compounds are particularly advantageous for use in a polymerization process wherein at least one polymerizable monomer is combined under polymerization conditions with a catalyst or catalyst composition to form a polymeric product. In addition, the complexes of the current invention are especially useful in the production of stereoregular polymers derived from α-olefins, especially isotactic polypropylene.

Group 4 metal complexes, especially metallocenes having utility as Ziegler-Natta polymerization catalysts, particularly when combined with an activator or cocatalyst are well known. In US-A-5,616,664, versions of such complexes wherein the metal is in the +2 formal oxidation state were disclosed. In Polyhedron (1989) 8(13-14), 1882 (1989), Metalloorg. Khim, 2(2), 395-403 (1989) and J. Chem. Soc. Chem. Commun, 6, 474-476, (1992) dimeric metal complexes containing µ-bridging anionic ligands but lacking in bridging groups joining the π-bonded moieties were disclosed. Stable dimeric ansa-metallocenes of Group 4 metals wherein the metal is in the +3 formal oxidation state have not been previously known much less disclosed for use in polymerization processes.

According to the present invention there are now provided dimeric Group 4 metal metallocene compounds corresponding to the formula: 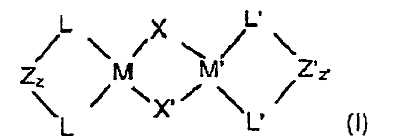 wherein:
L and L'independently each occurrence are ligand groups containing delocalized electrons by means of which said L and L' are π-bond to M or M' respectively,
M and M' are the same or different and are Group 4 metals in the +3 formal oxidation state,
Z and Z' are the same or different and are divalent bridging groups,
X and X' are the same or different and are anionic ligand groups, and
z and z' independently are 1.

In the compounds of the invention, some or all of the bonds between the core elements M, M', X and X' may possess partial bond characteristics. The compounds may exist in the form of a solution in an aliphatic or aromatic solvent, as solvated adducts, such as an adduct with a Lewis base, particularly a trihydrocarbyl phosphine or dihydrocarbyl ether, or as a solid crystal.

The compounds of the invention may be formed by contacting the corresponding Group 4 metal monomeric or dimeric complex containing three X groups for each M and three X' groups for each M', two of each three such X or X' groups being good leaving groups, with a source of the ligand groups: L-Z_{z}-L, or L'-Z'_{z'}-L'.

The present invented compounds are stable at elevated temperatures of at least 0 °C, preferably at least 20 °C up to as high as 150 °C or higher. Generally, they require protection from oxidants and water. They are usefully employed in a process for polymerization of ethylenically unsaturated monomers under solution, slurry, high pressure, or gas phase polymerization conditions either homogeneously or supported on an inert support. Relatively high yields of polymers may be readily obtained by use of the present metal complexes in the foregoing polymerization processes. Particularly, when employed as a component of a catalyst composition in a solution, slurry or gas-phase olefin polymerization processes, the present invented complexes are suitable for producing ethylene homopolymers and copolymers of ethylene and a C₃₋₈ α-olefin comonomer having high comonomer incorporation (low density) and additionally may provide polymers having enhanced long chain branch incorporation and increased molecular weights. The catalysts are also useful for preparing α-olefin homopolymers and copolymers of two or more α-olefins that are highly isotactic.

Accordingly, the present invention additionally provides a process for the polymerization of one or more ethylenically unsaturated, polymerizable monomers comprising contacting the same, optionally in the presence of an inert aliphatic, alicyclic or aromatic hydrocarbon, under polymerization conditions with the above metal complex and a cocatalyst.

All references herein to elements belonging to a certain Group refer to the Periodic Table of the Elements published and copyrighted by CRC Press, Inc., 1995. Also any reference to the Group or Groups shall be to the Group or Groups as reflected in this Periodic Table of the Elements using the IUPAC system for numbering groups.

Preferably, L and L' independently each occurrence are cyclic or non-cyclic, aromatic or non-aromatic, anionic ligand groups containing delocalized π-electrons capable of forming a bond with the Group 4 metal and containing up to 50 atoms other than hydrogen. Exemplary of such π-bonded groups are conjugated or nonconjugated, cyclic or non-cyclic dienyl groups, allyl groups, boratabenzene groups, and phosphole groups. Each atom in the delocalized π-bonded group may independently be substituted with a radical selected from the group consisting of hydrogen, halogen, hydrocarbyl, halohydrocarbyl, substituted heteroatom groups wherein the heteroatom is selected from Group 13-17 of the Periodic Table of the Elements, and the substituents are hydrocarbyl, silyl, hydrocarbylene, or another Group 13-17 heteroatom containing moiety, and optionally any of the foregoing hydrocarbyl, silyl, or hydrocarbylene substituents may be further substituted with a Group 13-17 heteroatom group. In addition two or more such radicals may together form a fused ring system, including partially or fully hydrogenated fused ring systems. Included within the term "hydrocarbyl" are C₁₋₂₀ straight, branched and cyclic alkyl or alkenyl radicals, C₆₋₂₀ aromatic radicals, C₇₋₂₀ alkyl-substituted aromatic radicals, and C₇₋₂₀ aryl-substituted alkyl radicals. Suitable heteroatom groups include alkoxy, aryloxy, dialkylamino, alkanediylamino, dialkylphosphino, silyl, germyl, and siloxy groups containing from 1 to 20 atoms not counting hydrogen. Examples include N,N-dimethylamino, pyrrolidinyl, trimethylsilyl, triethylsilyl, t-butyldimethylsilyl, methyldi(t-butyl)silyl, triphenylgermyl, and trimethylgermyl groups.

Examples of suitable anionic, delocalized π-bonded groups include cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, decahydroanthracenyl groups, indacenyl, s-indacenyl, gem-dimethylacenaphthalenyl, cyclopenta(*I*)phenanthrenyl phosphole, and boratabenzene groups, as well as C₁₋₂₀ hydrocarbyl-, C₁₋₂₀ dihydrocarbylamido-, C₁₋₂₀ hydrocarbyleneamido-, C₁₋₂₀ halohydrocarbyl-, C₁₋₂₀ amido-, or C₁₋₂₀ hydrocarbylsilyl-substituted derivatives thereof.

The boratabenzenes are anionic ligands that are boron-containing analogues to benzene. They are previously known in the art having been described by G. Herberich, et al., in Organometallics, 14,1,471-480 (1995). Preferred boratabenzenes correspond to the formula: 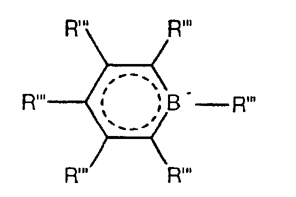 wherein R"' in one occurrence is a covalent bond to Z, and in each remaining occurrence R"' is independently, hydrogen or a hydrocarbyl, silyl, N,N-dihydrocarbylamino, hydrocarbadiylamino, or germyl group, said R"' having up to 20 atoms not counting hydrogen, and optionally one or more R"' groups may be bonded together forming a multicyclic fused ring system.

Phospholes are anionic ligands that are phosphorus- containing analogues to a cyclopentadienyl group. They are previously known in the art having been described by WO 98/50392, and elsewhere. Preferred phosphole ligands correspond to the formula: 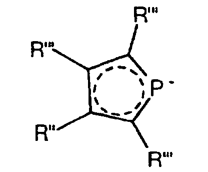 wherein R"' is as previously defined.

Preferred L and L' groups include cyclopentadienyl, indenyl, fluorenyl, tetrahydrofluorenyl and octahydrofluorenyl groups, optionally substituted with one or more hydrocarbyl, halo, halohydrocarbyl, dihydrocarbylamino, alkanediylamino, or silyl ligand groups and containing up to 30 atoms other than hydrogen. A particularly preferred L or L' group is the 2-methyl-4-phenylinden-1-yl group.

Suitable Z and Z' groups for use herein include carbon, silicon, germanium, aluminum, nitrogen, oxygen and/or boron containing divalent bridging groups containing up to 20 atoms other than hydrogen. Examples include divalent ligands corresponding to the following formulas: 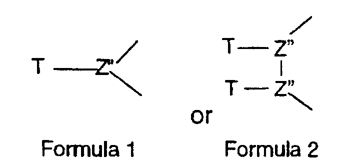 wherein:
Z" is boron or aluminum;
T independently each occurrence is: 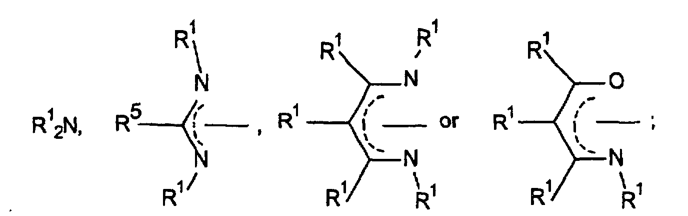
R¹ is independently each occurrence hydrogen, a hydrocarbyl group, a trihydrocarbylsilyl group, or a trihydrocarbylsilylhydrocarbyl group, said R¹ groups containing up to 20 atoms not counting hydrogen, and two such R¹ groups may optionally be joined together to form a ring structure; and
R⁵ is R¹ or N(R¹)₂.

Preferred Z groups are those corresponding to the formula BNR"'₂ or (ER'"₂)ᵣ wherein E is carbon, silicon or germanium, R"' independently each occurrence is hydrogen or a group selected from silyl, hydrocarbyl, hydrocarbyloxy and combinations thereof, or two R"' groups together form a ring system, said R"' having up to 30 atoms other than hydrogen, and r is an integer from 1 to 8. Preferably R"' independently each occurrence is hydrogen, methyl, methoxy, benzyl, tert-butyl or phenyl. Most highly preferred Z and Z' are both dimethylsilanediyl, dimethylamidoborane, or 1,2-ethanediyl.

Preferred Group 4 metals include zirconium and hafnium, most preferably zirconium. Preferred X groups are halide or C₁₋₁₀ hydrocarbyl, most preferably X each occurrence is methyl or chloride.

A preferred class of Group 4 metal compounds according to the present invention corresponds to the formula: 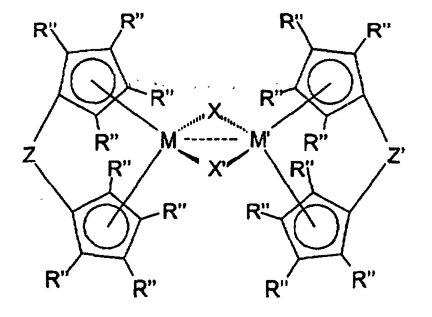 wherein:
M and M' are both zirconium or hafnium;
R" in each occurrence independently is selected from hydrogen, hydrocarbyl, silyl, halohydrocarbyl, N,N-dialkylamino, and alkanediylamino, said R" having up to 20 atoms, not counting hydrogen, or adjacent R" groups are joined together thereby forming a fused ring system,
X and X' each occurrence are C₁₋₁₀ hydrocarbyl, especially methyl, or halide; and
Z is SiR*₂, CR*₂, SiR*₂SiR*₂, CR*₂CR*₂, CR*=CR*, CR*₂SiR*₂, BNR*₂, or GeR*₂, wherein R* independently each occurrence is C₁₋₆ alkyl or C₆₋₁₀ aryl, or optionally two R* groups are joined together.

A most preferred class of Group 4 metal compounds according to the present invention corresponds to the formula: 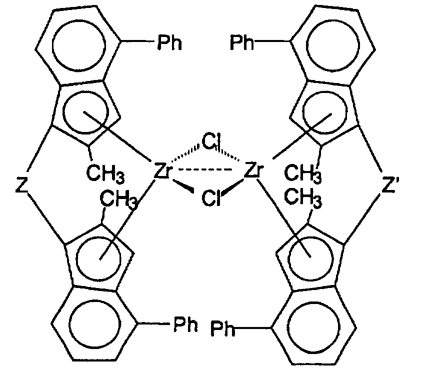 wherein:
Ph is phenyl, and
Z and Z' are each dimethylsilane, dimethylamidoborane or 1,2-ethanediyl.

The metal complexes exist as a mixture of two diastereomers and are suitably employed in an olefin polymerization in such form, or alternatively, the two isomers may be separated by standard techniques such as fractional crystallization.

The foregoing Group 4 metal complexes are readily prepared by reacting a dimeric compound corresponding to the formula: 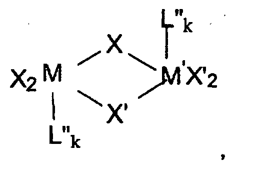 wherein
M, M', X, and X' are as previously defined,
L" is a Lewis base, and
k is a number from 0 to 3
with two equivalents of a metallated ligand corresponding to the formula:

MeL-Z-LMe, or MeL'-Z'-L'Me,

wherein,
L, L', Z, and Z' are as previously defined, and
Me is an alkali metal or Grignard.

The initial dimeric reagent for the process may be prepared by a process comprising contacting in any order, in an inert diluent, and optionally in the presence of a Lewis base, a Group 4 metal complex corresponding to the formula, MX₄, MX₄ (L)ₖ (or mixtures with compounds of the formula: M'X'₄ or M'X'₄ (L)ₖ) with a reducing agent. Highly preferably, the reducing agent in the foregoing process is an alkali metal or alkali metal alkyl, most preferably lithium or lithium alkyl, such as n-butyl lithium, and the inert diluent is a hydrocarbon liquid, most preferably an aliphatic or aromatic hydrocarbon. Also, preferably, the reaction is conducted in the presence of a trihydrocarbyl phosphine as a Lewis base.

In general, both of the foregoing processes involve combining the respective reactants, preferably in a solution, optionally while agitating and/or heating above ambient temperature (25°C). Recovery and purification of the intermediate products when a multiple step reaction is employed may be desirable, but is not required. The process preferably is conducted in an inert, noninterfering solvent at a temperature from -100°C to 300°C, preferably from -78 to 130°C, most preferably from -40 to 120°C.

Suitable inert, noninterfering solvents for the formation of the complexes are aliphatic and aromatic hydrocarbons and halohydrocarbons, ethers, and cyclic ethers. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; aromatic and hydrocarbyl-substituted aromatic compounds such as benzene, toluene, and xylene, C₁₋₄ dialkyl ethers, C₁₋₄ dialkyl ether derivatives of (poly)alkylene glycols, and tetrahydrofuran. Mixtures of solvents from the foregoing list are also suitable.

The recovery procedure involves separation of the resulting byproducts and devolatilization of the reaction medium. Extraction into a secondary solvent may be employed if desired. Altematively, if the desired product is an insoluble precipitate, filtration or other separation technique may be employed.

The complexes are rendered catalytically active by combination with an activating cocatalyst or by use of an activating technique. Suitable activating cocatalysts for use herein include polymeric or oligomeric alumoxanes, especially methylalumoxane, triisobutyl aluminum modified methylalumoxane, or isobutylalumoxane. Other activators can generally be used, optionally after alkylation or other technique is employed to produce a complex having an abstractable ligand group. Examples of other activators include neutral Lewis acids, such as C₁₋₃₀ hydrocarbyl substituted Group 13 compounds, especially tri(hydrocarbyl)aluminum- or tri(hydrocarbyl)boron compounds and halogenated (including perhalogenated) derivatives thereof, having from 1 to 20 carbons in each hydrocarbyl or halogenated hydrocarbyl group, more especially perfluorinated tri(aryl)boron compounds, and most especially tris(pentafluorophenyl)borane; nonpolymeric, compatible, noncoordinating, ion forming compounds (including the use of such compounds under oxidizing conditions), especially the use of ammonium-, phosphonium-, oxonium-, carbonium-, silylium-, sulfonium-, or ferrocenium- salts of compatible, noncoordinating anions; bulk electrolysis (explained in more detail hereinafter); and combinations of the foregoing activating cocatalysts and techniques. The foregoing activating cocatalysts and activating techniques have been previously taught with respect to different metal complexes in the following references: US-A-5,132,380, US-A-5,153,157, US-A-5,064,802, US-A-5,321,106, US-A-5,721,185, US-A-5,350,723, and WO-97/04234, equivalent to USSN 08/818,530, filed March 14, 1997.

Combinations of neutral Lewis acids, especially the combination of a trialkyl aluminum compound having from 1 to 4 carbons in each alkyl group and a halogenated tri(hydrocarbyl)boron compound having from 1 to 20 carbons in each hydrocarbyl group, especially tris(pentafluorophenyl)borane, further combinations of such neutral Lewis acid mixtures with a polymeric or oligomeric alumoxane, and combinations of a single neutral Lewis acid, especially tris(pentafluorophenyl)borane with a polymeric or oligomeric alumoxane are also suitable activating cocatalysts.

Suitable ion forming compounds useful as cocatalysts in one embodiment of the present invention comprise a cation which is a Bronsted acid capable of donating a proton, and a compatible, noncoordinating anion. As used herein, the term "noncoordinating" means an anion or substance which either does not coordinate to the Group 4 metal containing precursor complex and the catalytic derivative derived therefrom, or which is only weakly coordinated to such complexes thereby remaining sufficiently labile to be displaced by a Lewis bases such as olefin monomer. A noncoordinating anion specifically refers to an anion which when functioning as a charge balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

Preferably such cocatalysts may be represented by the following general formula:

(L*-H)_{d}⁺A'^{d-}

wherein:
L* is a neutral Lewis base;
(L*-H)⁺ is a Bronsted acid;
A'^{d-} is a noncoordinating, compatible anion having a charge of d-, and
d is an integer from 1 to 3.

More preferably A'^{d-} corresponds to the formula: [M*Q₄]⁻;
wherein:
M* is boron or aluminum in the +3 formal oxidation state; and
Q independently each occurrence is selected from hydride, dialkylamido, halide, hydrocarbyl, halohydrocarbyl, halocarbyl, hydrocarbyloxide, hydrocarbyloxy substituted-hydrocarbyl, organometal substituted-hydrocarbyl, organometalloid substituted-hydrocarbyl, halohydrocarbyloxy, halohydrocarbyloxy substituted hydrocarbyl, halocarbyl- substituted hydrocarbyl, and halo- substituted silylhydrocarbyl radicals (including perhalogenated hydrocarbyl- perhalogenated hydrocarbyloxy- and perhalogenated silylhydrocarbyl radicals), said Q having up to 20 carbons with the proviso that in not more than one occurrence is Q halide. Examples of suitable hydrocarbyloxide Q groups are disclosed in U. S. Patent 5,296,433.

In a more preferred embodiment, d is one, that is, the counter ion has a single negative charge and is A⁻. Activating cocatalysts comprising boron which are particularly useful in the preparation of catalysts of this invention may be represented by the following general formula:

(L*-H)⁺(BQ₄)⁻;

wherein:
L* is as previously defined;
B is boron in a formal oxidation state of 3; and
Q is a hydrocarbyl-, hydrocarbyloxy-, fluorinated hydrocarbyl-, fluorinated hydrocarbyloxy-, or fluorinated silylhydrocarbyl- group of up to 20 nonhydrogen atoms, with the proviso that in not more than one occasion is Q hydrocarbyl.

Most preferably, Q is each occurrence a fluorinated aryl group, especially, a pentafluorophenyl group.

Illustrative, but not limiting, examples of boron compounds which may be used as an activating cocatalyst in the preparation of the improved catalysts of this invention are
tri-substituted ammonium salts such as:
trimethylammonium tetraphenylborate,
methyldioctadecylammonium tetraphenylborate,
triethylammonium tetraphenylborate,
tripropylammonium tetraphenylborate,
tri(n-butyl)ammonium tetraphenylborate,
methyltetradecyloctadecylammonium tetraphenylborate,
N,N-dimethylanilinium tetraphenylborate,
N,N-diethylanilinium tetraphenylborate,
N,N-dimethyl(2,4,6-trimethylanilinium) tetraphenylborate,
trimethylammonium tetrakis(pentafluorophenyl)borate,
methylditetradecylammonium tetrakis(pentafluorophenyl)borate,
methyldioctadecylammonium tetrakis(pentafluorophenyl)borate,
triethylammonium tetrakis(pentafluorophenyl)borate,
tripropylammonium tetrakis(pentafluorophenyl)borate,
tri(n-butyl)ammonium tetrakis(pentafluorophenyl)borate,
tri(sec-butyl)ammonium tetrakis(pentafluorophenyl)borate,
N,N-dimethylanilinium tetrakis(pentafluorophenyl)borate,
N,N-diethylanilinium tetrakis(pentafluorophenyl)borate,
N,N-dimethyl(2,4,6-trimethylanilinium) tetrakis(pentafluorophenyl)borate,
trimethylammonium tetrakis(2,3,4,6-tetrafluorophenyl)borate,
triethylammonium tetrakis(2,3,4,6-tetrafluorophenyl)borate,
tripropylammonium tetrakis(2,3,4,6-tetrafluorophenyl)borate,
tri(n-butyl)ammonium tetrakis(2,3,4,6-tetrafluorophenyl)borate,
dimethyl(t-butyl)ammonium tetrakis(2,3,4,6-tetrafluorophenyl)borate,
N,N-dimethylanilinium tetrakis(2,3,4,6-tetrafluorophenyl)borate,
N,N-diethylanilinium tetrakis(2,3,4,6-tetrafluorophenyl)borate, and
N,N-dimethyl-(2,4,6-trimethylanilinium) tetrakis-(2,3,4,6-tetrafluorophenyl)borate;
dialkyl ammonium salts such as:
   dioctadecylammonium tetrakis(pentafluorophenyl)borate,
   ditetradecylammonium tetrakis(pentafluorophenyl)borate, and
   dicyclohexylammonium tetrakis(pentafluorophenyl)borate;
tri-substituted phosphonium salts such as:
   triphenylphosphonium tetrakis(pentafluorophenyl)borate, methyldioctadecylphosphonium tetrakis(pentafluorophenyl)borate, and
   tri(2,6-dimethylphenyl)phosphonium tetrakis(pentafluorophenyl)borate.

Preferred are tetrakis(pentafluorophenyl)borate salts of long chain alkyl mono- and disubstituted ammonium complexes, especially C₁₄-C₂₀ alkyl ammonium complexes, especially methyldi(octadecyl)ammonium tetrakis(pentafluorophenyl)borate and methyldi(tetradecyl)-ammonium tetrakis(pentafluorophenyl)borate, or mixtures including the same Such mixtures include protonated ammonium cations derived from amines comprising two C₁₄-, C₁₆-or C₁₈- alkyl groups and one methyl group. Such amines are available from Witco Corp., under the trade name Kemamine™ T9701, and from Akzo-Nobel under the trade name Armeen™ M2HT.

Another suitable ammonium salt, especially for use in heterogeneous catalyst systems is formed upon reaction of a organometal compound, especially a tri(C₁₋₆ alkyl)aluminum compound with an ammonium salt of a hydroxyaryltris(fluoroaryl)borate compound. The resulting compound is an organometaloxyaryltris(fluoroaryl)borate compound which is generally insoluble in aliphatic liquids. Typically, such compounds are advantageously precipitated on support materials, such as silica, alumina or trialkylaluminum passivated silica, to form a supported cocatalyst mixture. Examples of suitable compounds include the reaction product of a tri(C₁₋₆ alkyl)aluminum compound with the ammonium salt of hydroxyaryltris(aryl)borate. Suitable hydroxyaryltris(aryl)-borates include the ammonium salts, especially the foregoing long chain alkyl ammonium salts of:
(4-dimethylaluminumoxy-1-phenyl)tris(pentafluorophenyl)borate,
(4-dimethylaluminumoxy-3,5-di(trimethylsilyl)-1-phenyl)tris(pentafluorophenyl)borate,
(4-dimethylaluminumoxy-3,5-di(t-butyl)-1-phenyl)tris(pentafluorophenyl)borate,
(4-dimethylaluminumoxy-1 -benzyl)tris(pentafluorophenyl)borate,
(4-dimethylaluminumoxy-3-methyl-1-phenyl)tris(pentafluorophenyl)borate,
(4-dimethylaluminumoxy-tetrafluoro-1-phenyl)tris(pentafluorophenyl)borate,
(5-dimethylaluminumoxy-2-naphthyl)tris(pentafluorophenyl)borate,
4-(4-dimethylaluminumoxy-1-phenyl)phenyltris(pentafluorophenyl)borate,
4-(2-(4-(dimethylaluminumoxyphenyl)propane-2-yl)phenyloxy)tris(pentafluorophenyl)borate,
(4-diethylaluminumoxy-1-phenyl)tris(pentafluorophenyl)borate,
(4-diethylaluminumoxy-3,5-di(trimethylsilyl)-1-phenyl)tris(pentafluorophenyl)borate,
(4-diethylaluminumoxy-3,5-di(t-butyl)-1-phenyl)tris(pentafluorophenyl)borate,
(4-diethylaluminumoxy-1-benzyl)tris(pentafluorophenyl)borate,
(4-diethylaluminumoxy-3-methyl-1-phenyl)tris(pentafluorophenyl)borate,
(4-diethylaluminumoxy-tetrafluoro-1-phenyl)tris(pentafluorophenyl)borate,
(5-diethylaluminumoxy-2-naphthyl)tris(pentafluorophenyl)borate,
4-(4-diethylaluminumoxy-1-phenyl)phenyltris(pentafluorophenyl)borate,
4-(2-(4-(diethylaluminumoxyphenyl)propane-2-yl)phenyloxy)tris(pentafluorophenyl)borate,
(4-diisopropylaluminumoxy-1-phenyl)tris(pentafluorophenyl)borate,
(4-diisopropylaluminumoxy-3,5-di(trimethylsilyl)-1-phenyl)tris(pentafluorophenyl)borate,
(4-diisopropylaluminumoxy-3,5-di(t-butyl)-1-phenyl)tris(pentafluorophenyl)borate,
(4-diisopropylaluminumoxy-1-benzyl)tris(pentafluorophenyl)borate,
(4-diisopropylaluminumoxy-3-methyl-1-phenyl)tris(pentafluorophenyl)borate,
(4-diisopropylaluminumoxy-tetrafluoro-1-phenyl)tris(pentafluorophenyl)borate,
(5-diisopropylaluminumoxy-2-naphthyl)tris(pentafluorophenyl)borate,
4-(4-diisopropylaluminumoxy-1-phenyl)phenyltris(pentafluorophenyl)borate, and
4-(2-(4-(diisopropylaluminumoxyphenyl)propane-2-yl)phenyloxy)tris(pentafluorophenyl)borate.

An especially preferred ammonium compound is methylditetradecylammonium (4-diethylaluminumoxy-1-phenyl)tris(pentafluorophenyl)borate, methyldihexadecylammonium (4-diethylaluminumoxy-1-phenyl)tris(pentafluorophenyl)borate, methyldioctadecyl-ammonium (4-diethylaluminumoxy-1-phenyl)tris(pentafluorophenyl)borate, and mixtures thereof. The foregoing complexes are disclosed in US-A-5,834,393 and US-A-5,783,512.

Another suitable ion forming, activating cocatalyst comprises a salt of a cationic oxidizing agent and a noncoordinating, compatible anion represented by the formula:

(Ox^{e+})_{d} (A'^{d-})ₑ,

wherein
Ox^{e+} is a cationic oxidizing agent having a charge of e+;
e is an integer from 1 to 3; and
A'^{d-} and d are as previously defined.

Examples of cationic oxidizing agents include: ferrocenium, hydrocarbyl-substituted ferrocenium, Pb⁺² or Ag⁺ Preferred embodiments of A'^{d-} are those anions previously defined with respect to the Bronsted acid containing activating cocatalysts, especially tetrakis(pentafluorophenyl)borate.

Another suitable ion forming, activating cocatalyst comprises a compound which is a salt of a carbenium ion and a noncoordinating, compatible anion represented by the formula:

©⁺A'⁻

wherein:
©⁺ is a C₁₋₂₀ carbenium ion; and
A'⁻ is a noncoordinating, compatible anion having a charge of -1. A preferred carbenium ion is the trityl cation, especially triphenylmethylium.

A further suitable ion forming, activating cocatalyst comprises a compound which is a salt of a silylium ion and a noncoordinating, compatible anion represented by the formula:

R₃Si⁺A'⁻

wherein:
R is C₁₋₁₀ hydrocarbyl; and
A'⁻ is as previously defined.

Preferred silylium salt activating cocatalysts are trimethylsilylium tetrakispentafluorophenylborate, triethylsilylium tetrakispentafluorophenylborate and ether substituted adducts thereof. Silylium salts have been previously generically disclosed in J. Chem Soc. Chem. Comm., 1993, 383-384, as well as Lambert, J. B., et al., Organometallics, 1994, 13, 2430-2443. The use of the above silylium salts as activating cocatalysts for addition polymerization catalysts is claimed in US-A-5,625,087.

Certain complexes of alcohols, mercaptans, silanols, and oximes with tris(pentafluorophenyl)borane are also effective catalyst activators and may be used according to the present invention. Such cocatalysts are disclosed in US-A-5,296,433.

The molar ratio of catalyst/cocatalyst employed preferably ranges from 1:10,000 to 10:1, more preferably from 1:5000 to 10:1, most preferably from 1:1000 to 1:1. Alumoxane, when used by itself as an activating cocatalyst, is preferably employed in large molar ratio, generally at least 100 times the quantity of metal complex on a molar basis. Tris(pentafluorophenyl)borane, where used as an activating cocatalyst is preferably employed in a molar ratio to the metal complex of form 0.5:1 to 10:1, more preferably from 1:1 to 6:1 most preferably from 1:1 to 5:1. The remaining activating cocatalysts are generally preferably employed in approximately equimolar quantity with the metal complex of its alkylated derivative.

Suitable addition polymerizable monomers for use with the foregoing novel catalyst compositions include ethylenically unsaturated monomers, acetylenic compounds, conjugated or non-conjugated dienes, and polyenes. Preferred monomers include olefins, for example alpha-olefins having from 2 to 20,000, preferably from 2 to 20, more preferably from 2 to 8 carbon atoms and combinations of two or more of such alpha-olefins. Particularly suitable alpha-olefins include, for example, ethylene, propylene, 1-butene, isobutylene, 1-pentene, 4-methylpentene-1, 1-hexene, 1-heptene, 1-octene, 1-nonene, 1-decene, 1-undecene, 1-dodecene, 1-tridecene, 1-tetradecene, 1-pentadecene, or combinations thereof, as well as long chain vinyl terminated oligomeric or polymeric reaction products formed during the polymerization, and C₁₀₋₃₀ α-olefins specifically added to the reaction mixture in order to produce relatively long chain branches in the resulting polymers. Preferably, the alpha-olefins are ethylene, propylene, 1-butene, 1-pentene, 4-methyl-pentene-1, 1-hexene, 1-octene, and combinations of ethylene and/or propene with one or more other alpha-olefins. Other preferred monomers include styrene, halo- or alkyl substituted styrenes, vinylbenzocyclobutene, 1,4-hexadiene, dicyclopentadiene, ethylidene norbornene, and 1,7-octadiene. Mixtures of the above-mentioned monomers may also be employed.

In general, the polymerization may be accomplished under conditions well known in the prior art for Ziegler-Natta or Kaminsky-Sinn type polymerization reactions. Suspension, solution, slurry, gas phase or high pressure, whether employed in batch or continuous form or other process conditions, may be employed if desired. Examples of such well known polymerization processes are depicted in WO 88/02009, US-A-5,084,534, US-A-5,405,922, US-A-4,588,790, US-A-5,032,652, US-A-4,543,399, US-A-4,564,647, US-A-4,522,987, and elsewhere. Preferred polymerization temperatures are from 0-250°C. Preferred polymerization pressures are from atmospheric to 3000 atmospheres (1 to 3000 bar).

Preferred processing conditions include solution polymerization, more preferably continuous solution polymerization processes, conducted in the presence of an aliphatic or alicyclic liquid diluent. By the term "continuous polymerization" is meant that at least the products of the polymerization are continuously removed from the reaction mixture. Preferably one or more reactants are also continuously added to the polymerization mixture during the polymerization. Examples of suitable aliphatic or alicyclic liquid diluents include straight and branched-chain C₄₋₁₂ hydrocarbons and mixtures thereof; alicyclic hydrocarbons such as cyclohexane, cycloheptane, methylcyclohexane, methylcycloheptane, and mixtures thereof; and perfluorinated hydrocarbons such as perfluorinated C₄₋₁₀ alkanes. Suitable diluents also include aromatic hydrocarbons (particularly for use with aromatic α-olefins such as styrene or ring alkyl-substituted styrenes) including toluene, ethylbenzene or xylene, as well as liquid olefins (which may act as monomers or comonomers) including ethylene, propylene, 1 -butene, isobutylene, butadiene, 1-pentene, cyclopentene, 1-hexene, cyclohexene, 3-methyl-1-pentene, 4-methyl-1-pentene, 1,4-hexadiene, 1-octene, 1-decene, styrene, divinylbenzene, allylbenzene, vinyltoluene (including all isomers alone or in admixture). Mixtures of the foregoing are also suitable. The foregoing diluents may also be advantageously employed during the synthesis of the metal complexes and catalyst activators of the present invention.

In most polymerization reactions the molar ratio of catalyst:polymerizable compounds employed is from 10⁻¹²:1 to 10⁻¹:1, more preferably from 10⁻¹²:1 to 10⁻⁵:1.

Molecular weight control agents can be used in combination with the present cocatalysts. Examples of such molecular weight control agents include hydrogen, trialkyl aluminum compounds or other known chain transfer agents. A particular benefit of the use of the present cocatalysts is the ability (depending on reaction conditions) to produce narrow molecular weight distribution α-olefin homopolymers and copolymers in greatly improved catalyst efficiencies. Preferred polymers have Mw/Mn of less than 2.5, more preferably less than 2.3. Such narrow molecular weight distribution polymer products are highly desirable due to improved tensile strength properties.

The catalyst composition of the present invention can also be employed to advantage in the gas phase polymerization and copolymerization of olefins, preferably by supporting the catalyst composition by any suitable technique. Gas phase processes for the polymerization of olefins, especially the homopolymerization and copolymerization of ethylene and propylene, and the copolymerization of ethylene with higher alpha olefins such as, for example, 1-butene, 1-hexene, 4-methyl-1-pentene are well known in the art. Such processes are used commercially on a large scale for the manufacture of high density polyethylene (HDPE), medium density polyethylene (MDPE), linear low density polyethylene (LLDPE) and polypropylene.

The gas phase process employed can be, for example, of the type which employs a mechanically stirred bed or a gas fluidized bed as the polymerization reaction zone. Preferred is the process wherein the polymerization reaction is carried out in a vertical cylindrical polymerization reactor containing a fluidized bed of polymer particles supported above a perforated plate, the fluidization grid, by a flow of fluidization gas.

The gas employed to fluidize the bed comprises the monomer or monomers to be polymerized, and also serves as a heat exchange medium to remove the heat of reaction from the bed. The hot gases emerge from the top of the reactor, normally via a tranquilization zone, also known as a velocity reduction zone, having a wider diameter than the fluidized bed and wherein fine particles entrained in the gas stream have an opportunity to gravitate back into the bed. It can also be advantageous to use a cyclone to remove ultra-fine particles from the hot gas stream. The gas is then normally recycled to the bed by means of a blower or compressor and one or more heat exchangers to strip the gas of the heat of polymerization.

A preferred method of cooling of the bed, in addition to the cooling provided by the cooled recycle gas, is to feed a volatile liquid to the bed to provide an evaporative cooling effect. The volatile liquid employed in this case can be, for example, a volatile inert liquid, for example, a saturated hydrocarbon having about 3 to about 8, preferably 4 to 6, carbon atoms. In the case that the monomer or comonomer itself is a volatile liquid or can be condensed to provide such a liquid, this can be suitably be fed to the bed to provide an evaporative cooling effect. Examples of olefin monomers which can be employed in this manner are olefins containing from about 3 to about eight, preferably from 3 to six carbon atoms. The volatile liquid evaporates in the hot fluidized bed to form gas which mixes with the fluidizing gas. If the volatile liquid is a monomer or comonomer, it may undergo some polymerization in the bed. The evaporated liquid then emerges from the reactor as part of the hot recycle gas, and enters the compression/heat exchange part of the recycle loop. The recycle gas is cooled in the heat exchanger and, if the temperature to which the gas is cooled is below the dew point, liquid will precipitate from the gas. This liquid is desirably recycled continuously to the fluidized bed. It is possible to recycle the precipitated liquid to the bed as liquid droplets carried in the recycle gas stream, as described, for example, in EP-A-89691, US-A-4543399, WO 94/25495 and US-A-5352749. A particularly preferred method of recycling the liquid to the bed is to separate the liquid from the recycle gas stream and to reinject this liquid directly into the bed, preferably using a method which generates fine droplets of the liquid within the bed. This type of process is described in WO 94/28032.

The polymerization reaction occurring in the gas fluidized bed is catalyzed by the continuous or semi-continuous addition of catalyst. Such catalyst can be supported on an inorganic or organic support material if desired. The catalyst can also be subjected to a prepolymerization step, for example, by polymerizing a small quantity of olefin monomer in a liquid inert diluent, to provide a catalyst composite comprising catalyst particles embedded in olefin polymer particles.

The polymer is produced directly in the fluidized bed by catalyzed (co)polymerization of the monomer(s) on the fluidized particles of catalyst, supported catalyst or prepolymer within the bed. Start-up of the polymerization reaction is achieved using a bed of preformed polymer particles, which, preferably, is similar to the target polyolefin, and conditioning the bed by drying with a dry inert gas such as nitrogen prior to introducing the catalyst, the monomer(s) and any other gases which it is desired to have in the recycle gas stream, such as a diluent gas, hydrogen chain transfer agent, or an inert condensable gas when operating in gas phase condensing mode. The produced polymer is discharged continuously or discontinuously from the fluidized bed as desired, optionally exposed to a catalyst kill and optionally pelletized.

For polymerization of higher olefins such as propylene to produce polypropylene slightly different reaction conditions may be employed. The polymerization is generally conducted under continuous or semicontinuous slurry polymerization conditions in hydrocarbons such as propylene, propane, butene, butane, pentane, butene-2, isobutane, hexane, heptane, and mixtures of the foregoing, generally at temperatures from 50 to 100 °C, and pressures from atmospheric (0.1 MPa) to 1MPa. The polymerization may be conducted in one or more continuous stirred tank tubular reactors or fluidized bed, gas phase reactors, connected in series or parallel. Condensed monomer or solvent may be added to the gas phase reactor as is well known in the art. The catalyst may also be supported and/or prepolymerized prior to use.

In a continuous reaction system, the reaction mixture is typically maintained at conditions at which the polymer is produced as a slurry of powder in the reaction mixture. Use of highly active and highly stereospecific catalyst systems in propylene polymerization substantially eliminates the need to remove catalyst components or atactic polymer from the polymer product. The mixture of reaction components is fed continuously or at frequent intervals into the reactor system and is continuously monitored so as to ensure an efficient reaction and the desired product. For example, it is well known that supported coordination catalysts and catalyst systems of the type described above are highly sensitive, in varying degrees, to catalyst poisons such as water, oxygen, carbon oxides, acetylenic compounds and sulfur compounds. Introduction of such compounds may result in reactor upset and production of off-grade product. Typically, computer control systems are used to maintain process variables within acceptable limits, often by measuring polymer variables such as viscosity, density and tacticity, or catalyst productivity.

In the process, reactants and diluents, which may be a mixture of propylene, hydrogen, nitrogen, unreacted comonomers and inert hydrocarbons, are continuously recycled through the reactor, optionally with scavenging to remove impurities and condensation to remove the heat of polymerization. Catalyst and cocatalysts, fresh monomer or comonomer(s) and selectivity control agents, branching agents or chain transfer agents, if desired, are likewise continuously fed to the reactor. The polymer product is continuously or semi-continuously removed and volatile components removed and recycled. Suitable processes for preparing polypropylene polymers are known in the art and illustrated by those taught in US-A-4,767,735, US-A-4,975,403, and US-A-5,084,513, among others.

Utilizing the catalysts of the present invention, copolymers having high comonomer incorporation and correspondingly low density, yet having a low melt index, may be readily prepared. That is, high molecular weight polymers are readily attained by use of the present catalysts, even at elevated reactor temperatures. This result is highly desirable because the molecular weight of α-olefin copolymers can be readily reduced by the use of hydrogen or similar chain transfer agent, however increasing the molecular weight of α-olefin copolymers is usually only attainable by reducing the polymerization temperature of the reactor. Disadvantageously, operation of a polymerization reactor at reduced temperatures significantly increases the cost of operation since heat must be removed from the reactor to maintain the reduced reaction temperature, while at the same time heat must be added to the reactor effluent to vaporize the solvent. In addition, productivity is increased due to improved polymer solubility, decreased solution viscosity, and a higher polymer concentration. Utilizing the present catalysts, a-olefin homopolymers and copolymers having densities from 0.85 g/cm³ to 0.96 g/cm³, and melt flow rates from 0.001 to 1000 dg/min are readily attained in a high temperature process.

The catalyst system may be prepared as a homogeneous catalyst by addition of the requisite components to a solvent in which polymerization will be carried out by solution polymerization procedures. The catalyst system may also be prepared and employed as a heterogeneous catalyst by adsorbing the requisite components on a catalyst support material such as silica, alumina, aluminosilicates, or other suitable inorganic support material, or a polymer, such as preformed olefin polymer. A preferred support material is silica that has been heated (calcined) to 200 to 800 °C for a time sufficient to remove substantially all surface water and thereafter reacted with a Lewis acid, especially a C₁₋₆ trialkylaluminum compound to react substantially all available hydroxyl groups. The heterogeneous form of the catalyst system is employed in a slurry polymerization. As a practical limitation, slurry polymerization takes place in liquid diluents in which the polymer product is substantially insoluble. Preferably, the diluent for slurry polymerization is one or more hydrocarbons with less than 5 carbon atoms. If desired, saturated hydrocarbons such as ethane, propane or butane may be used in whole or part as the diluent. Likewise the α-olefin monomer or a mixture of different α-olefin monomers may be used in whole or part as the diluent. Most preferably the diluent comprises in at least major part the α-olefin monomer or monomers to be polymerized.

The polymerization may be carried out as a batchwise or a continuous polymerization process A continuous process is preferred, in which event catalyst, α-olefin, and optionally solvent and diene are continuously supplied to the reaction zone and polymer product continuously removed therefrom.

It is understood that the present invention is operable in the absence of any component which has not been specifically disclosed. The following examples are provided in order to further illustrate the invention and are not to be construed as limiting. Unless stated to the contrary, all parts and percentages are expressed on a weight basis. The term "ovemight", if used, refers to a time of approximately 16-18 hours, "room temperature", if used, refers to a temperature of about 20-25 °C, and "mixed alkanes" refers to a mixture of hydrogenated propylene oligomers, mostly C₆-C₁₂ isoalkanes, available commercially under the trademark Isopar E™ from Exxon Chemicals Inc.

Tetrahydrofuran (THF), diethylether, toluene, and other solvents were used following passage through double columns charged with activated alumina and alumina supported mixed metal oxide catalyst (Q-5® catalyst, available from Engelhard Corp.) Grignard reagents, n-BuLi, MAO, and metal halides, if recited, were all used as purchased from the supplier. All syntheses were performed under dry nitrogen or argon atmosphere using a combination of glove box and high vacuum techniques. All chemical shifts for ³¹P NMR spectra were relative to a fixed external standard (H₃PO₄) in benzene-*d*₆ or toluene-*d*₈, both of which were dried over Na/K alloy and filtered or distilled prior to use. ¹H and ¹³C NMR shifts were referenced to internal solvent resonances and are reported relative to TMS.

### Example 1 dimethylsilanebis(2-methyl-4-phenylindenyl-1-yl)chloro zirconium (III) dimer

### Step A Preparation of zirconium (III) trichloride bis(tri-n-propylphosphine) dimer

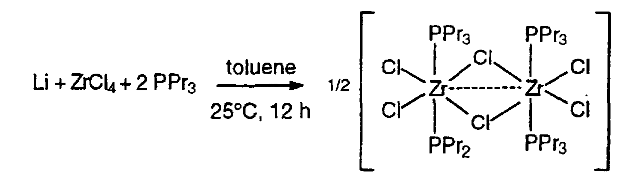

In a glove box, lithium powder (0.309 g, 44.47 mmol, low sodium) was added to a toluene solution of zirconium tetrachloride-(tri-n-propylphosphine)₂ adduct (prepared from a dropwise addition of 8.9 mL (44.47 mmol) tri-n-propylphosphine to a suspension of 5.18 g (22.24 mmol) ZrCl₄ in 100 mL of toluene) and the mixture was then stirred for 12 h at room temperature. The resulting dark green suspension was filtered through a glass frit using diatomaceous earth filter aid. The volatile components were removed under reduced pressure to afford 10.53 g of the product as a green solid. Both ¹H and ³¹P NMR spectra indicated the desired pure product without any further purification. Yield: 91.4 percent. ¹H NMR (C₆D₆): δ 2.06 (s, br, 12 H, CH₂), 1.69 (s, br, 12 H, CH₂), 0.97 (t, ³*J*_{H-H} = 7.2 Hz, 18 H, CH₃). ³¹P NMR (C₆D₆): δ -9.66 (s).

### Step B Preparation of dimethylsilanebis(2-methyl-4-phenylindenyl-1-yl)chloro zirconium (III) dimer

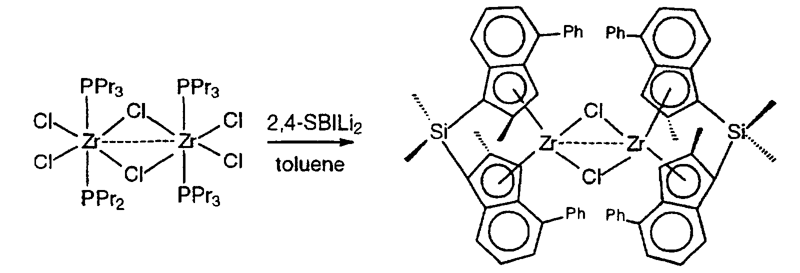

In a glove box, dimethylsilanebis(2-methyl-4-phenylindenyl)dilithium salt (2,4-SBILi₂) (1.922 g, 4.00 mmol) was suspended in 80 mL toluene in a flask and the mixture was cooled to -35°C in the freezer. To this suspension was added solid [ZrCl₃(n-Pr₃P)₂]₂ (2.07 g, 2.00 mmol) in small portions and the mixture was stirred at room temperature for 4 h. The resulting dark red suspension was filtered through a glass frit using diatomaceous earth filter aid and the volatile components were removed under reduced pressure. Hexane (20 mL) was added to the resulting sticky red residue and stirred for 10 min, and then filtered. The solid which collected by filtration was washed with hexane (2 × 5 mL) and dried under vacuum for overnight to produce a greenish brown solid (1.88 g, 80 percent yield). NMR spectra of this crude product indicated the formation of a mixture of two diastereomers with a 1:1.2 molar ratio. There was some residual n-Pr₃P present in the product based on ³¹P NMR. The crude material was then redissolved in toluene and filtered. The solvent was removed under reduced pressure and the residue was taken up hexane. The resulting slurry was filtered and the brown solid which collected was dried at 40°C for few hours. The corresponding NMR spectra indicated a clean product (a mixture of diastereomers believed to be rac-rac and meso-meso in a molar ratio of 1:1.5) with interaction between zirconium atoms. There was no phosphine residue detected by ³¹P NMR.
¹H NMR (C₆D₆, 23°C) for diastereomer A (40 percent): δ 7.84 (d, *J*_{H-H} = 7.8 Hz, 8 H, C₆-ring H), 7.30 (d, *J*_{H-H} = 8.7 Hz, 4 H, C₆-ring H), 7.23-6.95 (m, 20 H, C₆-ring H), 6.86 (t, *J*_{H-H} = 6.9 Hz, 4 H, C₅-ring H), 2.01 (s, 12 H, Cp-Me), 0.77 (s, 12 H, SiMe₂). Diastereomer B (60 percent): δ 7.79 (d, *J*_{H-H} = 7.8 Hz, 8 H, C₆-ring H), 7.42 (d, *J*_{H-H} = 8.7 Hz, 4 H, C₆-ring H), 7.23-6.95 (m, 20 H, C₆-ring H), 6.72 (t, *J*_{H-H} = 6.9 Hz, 4 H, C₅-ring H), 2.13 (s, 12 H, Cp-Me), 0.93 (s, 6 H, SiMe₂), 0.68 (s, 6 H, SiMe₂). ESR in toluene, g value= 1.973.

### Further syntheses

### 1. Preparation of dimethylsilanebis(2-methyl-4-phenylindenyl-1-yl)(α-dimethylamino)benzyl zirconium

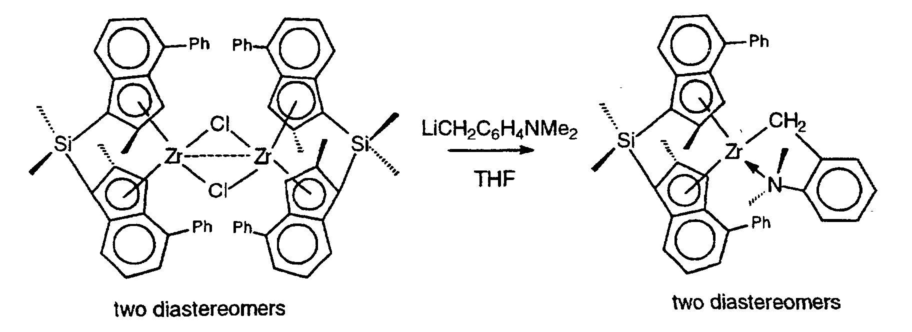

In a glove box, dimethylsilanebis(2-methyl-4-phenylindenyl-1-yl)chloro zirconium dimer (0.355 g, 0.30 mmol) was dissolved in 20 mL THF in a flask and α-dimethylamino benzyl lithium (0.085, 0.60 mmol) was added in solid. The mixture was stirred at room temperature for overnight. The solvent of the resulting dark red suspension was removed under reduced pressure and the residue was extracted with 20 mL of toluene. The slurry was filtered through a glass frit using diatomaceous earth filter aid and the volatile components were removed under reduced pressure. Hexane (20 mL) was added to the resulting residue and stirred for 10 min, and then filtered. The solid which collected by filtration was washed with hexane (2 x 5 mL) and dried under vacuum for overnight to produce a brown solid (0.18 g, 44 percent yield). NMR spectra showed only broad peaks.

### 2) Oxidation of dimethylsilanebis(2-methyl-4-phenylindenyl-1-yl)chloro zirconium dimer

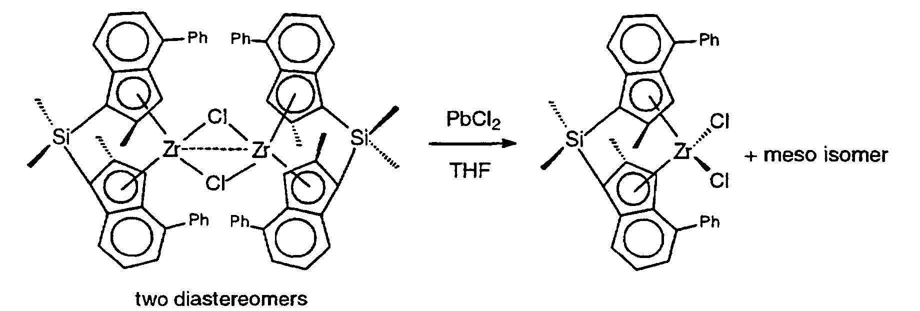

In a glove box, dimethylsilanebis(2-methyl-4-phenylindenyl-1-yl)chloro zirconium dimer (0.355 g, 0.30 mmol) was dissolved in 20 mL THF in a flask and lead dichloride (0.10 g, 0.36 mmol) was added in solid. The mixture was stirred at room temperature for 2 h and the formation of lead metal was gradually visible. The solvent of the resulting yellow suspension was removed under reduced pressure and the residue was extracted with 20 mL of toluene. The slurry was filtered through a glass frit using diatomaceous earth filter aid and the volatile components were removed under reduced pressure. Hexane (20 mL) was added to the resulting residue and stirred for 10 min, and then filtered. The solid which collected by filtration was washed with hexane (2 x 5 mL) and dried under vacuum to 0.31 g of the product as an orange solid (84 percent yield). NMR spectra indicated formation of a mixture of racemic and meso isomers in a 1:1.2 ratio.

### Polymerizations

All feeds were passed through columns of alumina and a decontaminant (Q-5™ catalyst available from Englehardt Chemicals Inc.) prior to introduction into the reactor. Catalyst and cocatalysts are handled in a glovebox containing an atmosphere of argon or nitrogen. A stirred 2.0 liter reactor is charged with about 740 g of mixed alkanes solvent and 119 g of 1-octene comonomer. Hydrogen is added as a molecular weight control agent by differential pressure expansion from a 75 ml addition tank at 25 psi (170 kPa). The reactor is heated to the polymerization temperature of 140 °C and saturated with ethylene at 500 psig (3.4 MPa). Catalysts and activator (methylalumoxane, MAO), as dilute solutions in toluene, were mixed and transferred to a catalyst addition tank and injected into the reactor. The polymerization conditions were maintained for 15 minutes with ethylene added on demand. The resulting solution was removed from the reactor, quenched with isopropyl alcohol, and stabilized by addition of 10 ml of a toluene solution containing approximately 67 mg of a hindered phenol antioxidant (Irganox™ 1010 from Ciba Geigy Corporation) and 133 mg of a phosphorus stabilizer (Irgafos™ 168 from Ciba Geigy Corporation.

Between polymerization runs a wash cycle in which 850 g of mixed alkanes is added to the reactor and the reactor heated to 150 °C was conducted. The reactor was then emptied of the heated solvent immediately before beginning a new polymerization run.

Polymers were recovered by drying in a vacuum oven set at 140 °C for about 20 hours. Density values are derived by determining the polymer's mass when in air and when immersed in methylethyl ketone. Micro melt index values (MMI) are obtained using a Custom Scientific Instrument Inc. Model CS-127MF-015 apparatus at 190 °C, and are unit-less values calculated as follows: MMI = 1/(0.00343 t - 0.00251), where t = time in seconds as measured by the instrument. Results are contained in Table 1.

**Table 1**

| run | Catalyst | µmoles catalyst/ activator | Exotherm (°C) | Yield (g) | Efficiency (g polymer/ µmole metal) | Density (g/cm³) | MMI** (dg/min) | Tm, Tc (°C) |
|---|---|---|---|---|---|---|---|---|
| A* | CGC-TiCl₂ | 2.5/2500 | 8.7 | 64.1 | 25.6 | 0.910 | 4.5 | |
| 1 | Ex. 1 | 2.5/2500 | 39.1 | 197.7 | 79.1 | 0.876 | 37.1 | |
| 2 | " | 1/1000 | 19.3 | 169.8 | 169.8 | 0.878 | 14.2 | |
| 3 | " | 0.5/500 | 5.3 | 125.1 | 250.2 | 0.884 | 8.0 | 86.8, 69.6 |
| B* | CGC-TiCl₂ | 2.5/2500 | 7.6 | 64.8 | 25.9 | 0.910 | 11.0 | 104.4, 85.5 |

| | | | | | | | | |
|---|---|---|---|---|---|---|---|---|
| • ((t-butylamido)(tetramethylcyclopentadienyl)titanium dichloride, comparative, not an example of the invention ** melt index, determined by comparison to known standards using micromelt index technique | | | | | | | | |

### Propylene Homopolymerization

The previous polymerization conditions were substantially repeated using the 2-liter Parr reactor charged with about 600 g of Isopar-E™ mixed alkanes solvent and 150 g of propylene. Hydrogen was added as a molecular weight control agent by differential pressure expansion form a 75 ml addition tank at 25 psi (170 kPa). The reactor was heated to the indicated polymerization temperature (70 or 90 °C) and catalyst and cocatalyst (MAO) mixed and transferred to a catalyst addition tank and injected into the reactor.

The polymerization conditions were maintained for 10 min. The resulting solution is removed from the reactor, quenched with isopropyl alcohol, and stabilized by addition of 10 mL of a toluene solution containing approximately 67 mg of a hindered phenol antioxidant (Irganox™ 1010 from Ciba Geigy Corporation) and 133 mg of a phosphorus stabilizer (Irgafos™ 168 from Ciba Geigy Corporation) were then added. The polymers were recovered by devolatilization at 120 °C for approximately 20 hours. Results are contained in Table 2.

**Table 2**

| run | Catalyst | µmoles catalyst/ activator | Temp. (°C) | Yield (g) | Efficiency (g polymer/ µmole metal) | Tm (°C) |
|---|---|---|---|---|---|---|
| 4 | Ex. 1 | 0.5/500 | 70 | 65.0 | 130 | 157.1 |
| 5 | Ex. 1 | 0.5/500 | 90 | 74.0 | 148 | 156.4 |
| 6 | Ex. 1 | 0.5/500 | 70 | 60.2 | 121 | 157.3 |
| D* | CE* | 2.0/2.0 | 70 | 32.2 | 16.1 | 159.1 |

| | | | | | | |
|---|---|---|---|---|---|---|
| * comparative, not an example of the invention; catalyst = (rac-dimethylsilane bis(2-methyl-4-phenylindenyl)zirconium 1,4-diphenylbutadiene, prepared according to US-A-5,616,664 and activator dioctadecylmethylammonium 1,3-bis(tris(pentafluorophenyl) alumane)-2-undecylimidazolide, prepared according to U.S.S.N. 09/234831, filed January 21, 1999 (WO99/42467). | | | | | | |

### Example 2 Preparation of dimethylsilanebis(2-methyl-4-phenylindenyl-1-yl)methyl zirconium dimer ((2,4-SBI)ZrMe dimer)

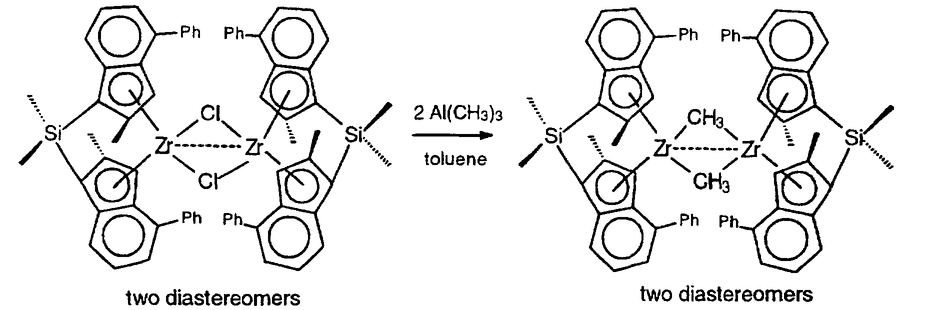

In a glove box, dimethylsilanebis(2-methyl-4-phenylindenyl-1-yl)chloro zirconium dimer (0.353 g, 0.30 mmol) was dissolved in 15 mL toluene in a flask and trimethyl aluminum (2.0 M in toluene, 0.3 mL, 0.60 mmol) was added via syringe. The mixture was stirred at room temperature for 2 h and filtered through a glass frit using diatomaceous earth filter aid. The solvent was removed under reduced pressure and the residue was extracted with 20 mL of hexane and filtered after stirring for 0.5 h. The solvent of the resulting green solution was reduced and cooled to -40 °C, affording a brown solid. ¹H- and ¹³C-NMR analyses of this solid indicated a mixture of species. This product was discarded. The green solid that remained after filtration and solvent removal was dried under reduced pressure. Examination by ¹H NMR indicated the substance was the desired product. Yield: 0232 g, 68.2 percent. Further recrystallization was carried out by layering hexane onto a toluene solution of the product which was retained in a freezer at -40 °C for several days. Dark green crystals were recovered. Analysis by ¹H NMR spectroscopy showed the product to be a mixture of two diastereomers.

### Example 3 Dimethylsilanebis(2-methyl-4-phenylindenyl-1-yl)chloro hafnium (III) dimer

### Step A Preparation of hafnium (III) trichloride bis(triethylphosphine) dimer

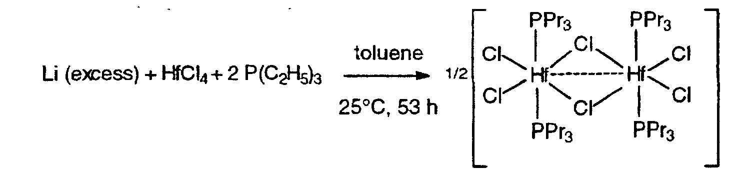

In a glove box, lithium powder (0.309 g, 44.47 mmol, low sodium) was added to a toluene solution of zirconium tetrachloride(triethylphosphine)₂ adduct (prepared from a dropwise addition of 6.57 mL (44.48 mmol) triethylphosphine to a suspension of 7.12 g (22.24 mmol) HfCl₄ in 100 mL of toluene) and the mixture was then stirred for 22 h at room temperature. NMR spectra of a reaction aliquot indicated incomplete reaction. Another two equivalents of Li was added and the mixture was stirred for another 23 h. The reaction was still not complete, and another 2 equiv. of Li was then added and the mixture was stirred for 7 h (total 6 equiv. of Li, stirring for 53 h). The resulting dark suspension was filtered through a glass frit using diatomaceous earth filter aid and the volatile components were removed under reduced pressure. After washing with cold hexane and further drying under reduced pressure, 4.67 g of the product as a dark green solid was recovered. The crude product was further recrystallized from hexane at -40 °C to afford dark green crystals suitable för X-ray diffraction studies. ¹H NMR (C₆D₆): δ 2.05 (s, br, 24 H, CH₂), 1.13 (s, br, 36 H, CH₃). ³¹P NMR (C₆D₆): δ -3.97 (s).

### Step B Preparation of dimethylsilanebis(2-methyl-4-phenylindenyl-1-yl)chloro hafnium (III) dimer

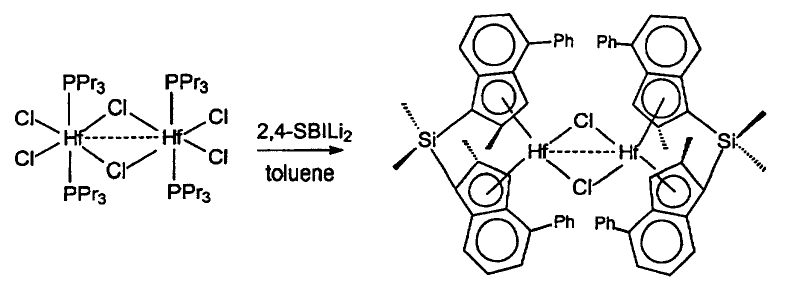

In a glove box, to a toluene (20 mL) suspension of dimethylsilanebis(2-methyl-4-phenylindenyl)dilithium salt (2,4-SBILi₂) (0.148 g, 0.31 mmol) in a flask was added solid [ZrCl₃(Et₃P)₂]₂ (0.16 g, 0.15 mmol) in small portions and the mixture was stirred at room temperature for 4 h. The resulting dark red suspension was filtered through a glass frit using diatomaceous earth filter aid and the volatile components were removed under reduced pressure. The residue was washed with 5 mL cold hexane and dried in vacuo to give 0.17 g of the product as a black solid (81.7 percent). Analysis by NMR spectroscopy indicated formation of a mixture of two diastereomers in a 1:1 ratio.

Spectroscopic data for [Me₂Si(2-Me-4-Ph-η⁵-Ind)₂HfCl]₂ are as follows. ¹H NMR (C₆D₆, 23 °C) for two diastereomers exhibiting metal center interaction: δ 7.85, 7.82 (d, *J*_{H-H} = 7.8 Hz, 8 H, C₆-ring H), 7.42, 7.30 (d, *J*_{H-H} = 8.7 Hz, 4 H, C₆-ring H), 7.23-6.95 (m, 20 H, C₆-ring H), 6.86, 6.71 (t, *J*_{H-H} = 6.9 Hz, 4 H, C₅-ring H), 2.25, 2.12 (s, 12 H, Cp-Me), 0.94, 0.79, 0.65 (s, 12 H, SiMe₂).

### Example 4 Dimethylsilanebis(2-methyl-4-phenylindenyl-1-yl)chloro titanium (III) dimer

### Step A Preparation of titanium (III) trichloride bis(dmpe) dimer

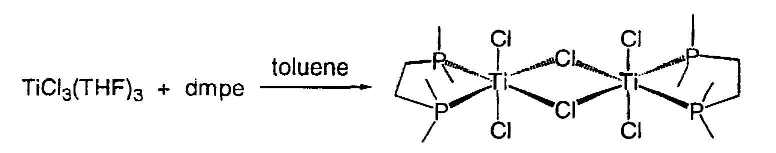

In a glove box, TiCl₃(THF)₃ (0.342 g, 0.92 mmol) was suspended in 25 mL toluene and 1,2-ethanebis(dimethylphosphine) (dmpe) (0.269 mL, 1.61 mmol) was added. The resulting blue suspension was stirred at room temperature for 2 h and the mixture was then filtered through a glass frit using diatomaceous earth filter aid to afford a blue solution. Hexane (10 mL) was layered onto the solution and the mixture was cooled to -35 °C. Blue crystals were collected after filtration and drying under vacuum. Yield, 0.25 g (89 percent).

### Step B Preparation of dimethylsilanebis(2-methyl-4-phenylindenyl-1-yl)chloro titanium (III) dimer

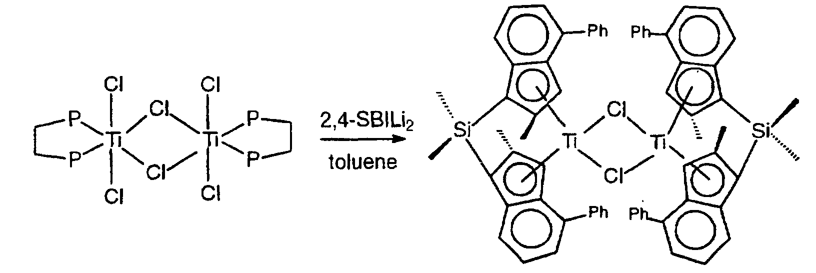

In a glove box, dimethylsilanebis(2-methyl-4-phenylindenyl)dilithium salt (2,4-SBILi₂) (0.395 g, 0.82 mmol) and [TiCl₃(dmpe]₂ dimer (0.25 g, 0.41 mmol) were slurried in 30 mL toluene and the mixture was stirred at room temperature for 4 h. The resulting dark brown suspension was filtered through a glass frit using diatomaceous earth filter aid and the solvent of the filtrate was removed under reduced pressure. The residue was washed with 3 mL cold hexane and dried in vacuo to give 0.39 g of the product as a brown solid (87 percent). NMR spectra of the product showed only very broad peaks. Oxidizing this Ti(III) dimer to the Ti(IV) monomer with PbCl₂ in THF and analyzing the product by NMR indicated formation of a mixture of two diastereomers in a 1:1.2 ratio.

### Example 5 Alternate preparation of dimethylsilanebis(2-methyl-4-phenylindenyl-1-yl)chloro titanium (III) dimer

The reaction conditions of Example 4, step b were substantially repeated excepting that TiCl₃(THF)₃ was reacted with dimethylsilanebis(2-methyl-4-phenylindenyl)dilithium salt (2,4-SBILi₂) in toluene. Yield was 90.4 percent.

### Example 6 Preparation of dimethylaminoboraneyldiyl-bis(2-methyl-4-phenylindenyl-1-yl)chloro zirconium (III) dimer

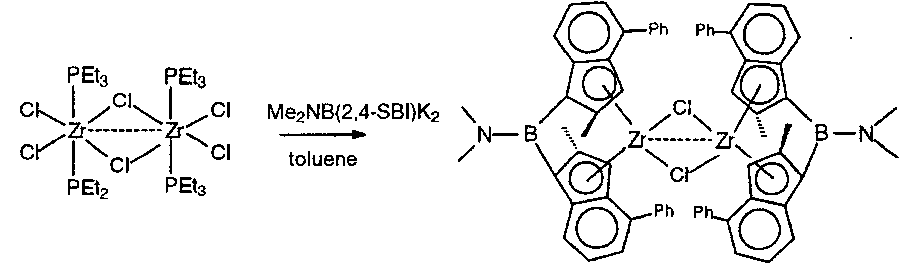

In a glove box, dimethylaminoboranediyl-bis(2-methyl-4-phenylindenyl) dipotassium salt (Me₂NB-2,4-SBIK₂) (0.542 g, 1.00 mmol) and [ZrCl₃(Et₃P)₂]₂ dimer (0.434 g, 0.50 mmol) were mixed in 30 mL toluene and stirred at room temperature for 4 h. The resulting dark red suspension was filtered through a glass frit using diatomaceous earth filter aid and the volatile components were removed under reduced pressure to give 0.52 g (88 percent) of the crude product. The product was further washed with 10 mL cold hexane and filtered and dried in vacuo for 2 h, affording 0.2 g of the dark solid as a mixture of two diastereomers in a 1:1.2 ratio.

Spectroscopic data for [Me₂NB(2-Me-4-Ph-η⁵-Ind)₂ZrCl]₂ are as follows. ¹H NMR (C₆D₆, 23 °C) for diastereomer A (54 percent): δ 7.90 (d, *J*_{H-H} = 7.8 Hz, 8 H, C₆-ring H), 7.30 (d, *J*_{H-H} = 8.7 Hz, 4 H, C₆-ring H), 7.23-6.95 (m, 20 H, C₆-ring H), 6.80 (t, *J*_{H-H} = 6.9 Hz, 4 H, C₅-ring H), 2.81 (s, 12 H, Me₂N), 1.94 (s, 12 H, Cp-Me). Diastereomer B (45 percent): δ 7.82 (d, *J*_{H-H} = 7.8 Hz, 8 H, C₆-ring H), 7.25 (d, *J*_{H-H} = 8.7 Hz, 4 H, C₆-ring H), 7.23-6.95 (m, 20 H, C₆-ring H), 6.69 (t, *J*_{H-H} = 6.9 Hz, 4 H, C₅-ring H), 2.83 (s, 12 H, Me₂N), 2.04 (s, 12 H, Cp-Me).

### Example 7 Preparation of dimethylsilane(t-butylamido)(tetramethylcyclopentadienyl)chloro zirconium dimer

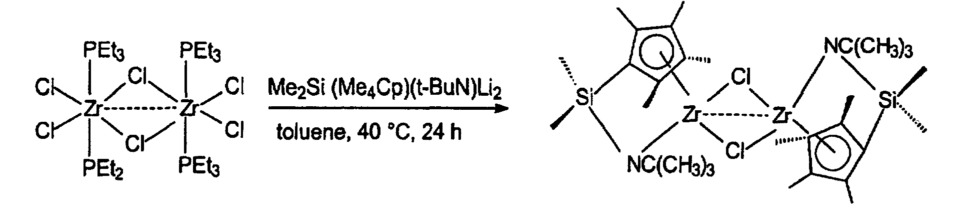

In a glove box, dimethylsilyl(t-butylamido)(tetramethylcyclopentadienyl) dilithium salt (Me₂Si (Me₄Cp)(t-BuN)Li₂) (0.263 g, 1.00 mmol) and [ZrCl₃(Et₃P)₂]₂ dimer (0.434 g, 0.50 mmol) were mixed in 20 mL toluene and stirred at room temperature overnight. NMR spectra of aliquots taken from the reaction mixture indicated incomplete reaction. The mixture was then heated to 40 °C and stirred at this temperature for 24 h. The resulting dark suspension was filtered through a glass frit using diatomaceous earth filter aid and the volatile components were removed under reduced pressure to give 0.33 g (89 percent) of the product as a dark gray solid. NMR spectra of the material indicated the clean product as a mixture of two diastereomers in a 2.5:1 ratio.

Spectroscopic data for [Me₂Si(Me₄Cp)(*t*-BuN)ZrCl]₂ are as follows. ¹H NMR (C₆D₆, 23 °C) for two diastereomers: δ 2.02, 2.01, 1.95, 1.72 (s, 24 H, Cp-Me), 1.33 (s, 18 H, *t*-Bu), 0.42 (s, 12 H, SiMe₂).

### Propylene Homopolymerization

A 2-liter Parr reactor was charged with about 600 g of Isopar-E™ mixed alkanes solvent and 150 g of propylene. Hydrogen was added as a molecular weight control agent by differential pressure expansion form a 75 ml addition tank at 25 psi (170 kPa). The reactor was heated to 70 °C and catalyst and methylalumoxane cocatalyst (MAO) were mixed, transferred to a catalyst addition tank, and injected into the reactor.

The polymerization conditions were maintained for 10 min. The resulting solution is removed from the reactor, quenched with isopropyl alcohol, and stabilized by addition of 10 mL of a toluene solution containing approximately 67 mg of a hindered phenol antioxidant (Irganox™ 1010 from Ciba Geigy Corporation) and 133 mg of a phosphorus stabilizer (Irgafos™ 168 from Ciba Geigy Corporation. The polymers were recovered by devolatilization at 120 °C for approximately 20 hours. Results are contained in Table 3.

**Table 3**

| Catalyst | µmoles catalyst/ activator | Yield (g) | Efficiency (g polymer/ µmole metal) | Tm (°C) | Mw (10⁴) |
|---|---|---|---|---|---|
| Ex. 3 | 6.0/6000 | 10.9 | 1.82 | 158.4 | 12.0 |
| Ex. 4 | 7.0/7000 | 11.6 | 1.66 | 157.2 | 2.77 |
| Ex. 6 | 0.5/500 | 40.6 | 81.2 | 156.0 | 26.7 |
| Ex. 7 | 6.0/6000 | 5.6 | 0.93 | 145.3 | 2.12 |

## Claims

1. A dimeric Group 4 metal metallocene compound corresponding to the formula: 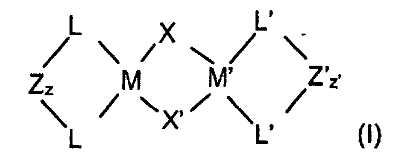 wherein:
L and L' independently each occurrence are ligand groups containing delocalized electrons by means of which said L and L' are π-bond to M or M' respectively,
M and M' are the same or different and are Group 4 metals in the +3 formal oxidation state,
Z and Z' are the same or different and are divalent bridging groups,
X and X' are the same or different and are anionic ligand groups, and
z and z' are 1.

2. A metal complex according to Claim 1 wherein L and L' are a cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, decahydroanthracenyl, indacenyl, s-indacenyl, gem-dimethylacenaphthalenyl, cyclopenta(*l*)phenanthrenyl, phosphole, or boratabenzene group, or a C₁₋₂₀ hydrocarbyl-, C₁₋₂₀ dihydrocarbylamido-, C₁₋₂₀ hydrocarbyleneamido-, C₁₋₂₀ halohydrocarbyl-, C₁₋₂₀ amido-, or C₁₋₂₀ hydrocarbylsilyl- substituted derivative thereof.

3. A metal complex according to Claim 2 wherein both L and L' are 2-methyl-4-phenylinden-1-yl.

4. A metal complex according to any one of the preceding claims wherein Z and Z' are divalent groups corresponding to the following formulas: 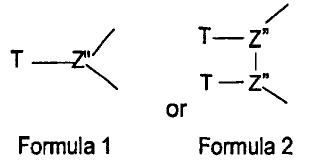 wherein:
Z" is boron or aluminum;
T independently each occurrence is: 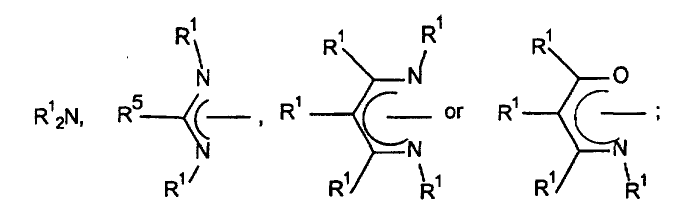
R¹ is independently each occurrence hydrogen, a hydrocarbyl group, a trihydrocarbylsilyl group, or a trihydrocarbylsilylhydrocarbyl group, said R¹ groupₛ containing up to 20 atoms not counting hydrogen, and two such R¹ groups may optionally be joined together to form a ring structure; and
R⁵ is R¹ or N(R¹)₂.

5. A metal complex according to any one of the preceding claims wherein Z and Z', are selected from groups corresponding to the formula BNR'"₂ or (ER"'₂)ᵣ wherein
E is carbon, silicon or germanium,
R"' independently each occurrence is hydrogen or a group selected from silyl, hydrocarbyl, hydrocarbyloxy and combinations thereof, or two R"' groups together form a ring system, said R"' having up to 30 atoms other than hydrogen,
and r is an integer from 1 to 8.

6. A metal complex according to Claim 5 wherein R"' independently each occurrence is hydrogen, methyl, methoxy, benzyl, tert-butyl or phenyl.

7. A metal complex according to Claim 5 wherein Z and Z' each occurrence are both dimethylsilanediyl, dimethylamidoborane or 1,2-ethanediyl.

8. A metal complex according to Claim 1 corresponding to the formula: 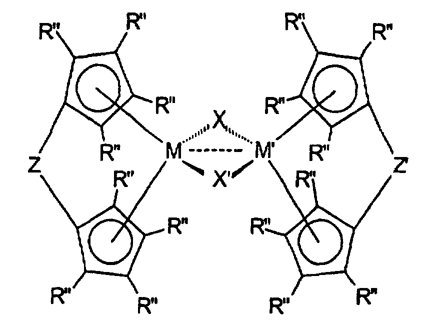 wherein:
M and M' are both zirconium or hafnium;
R" in each occurrence independently is selected from hydrogen, hydrocarbyl, silyl, halohydrocarbyl, N,N-dialkylamino, and alkanediylamino, said R" having up to 20 atoms, not counting hydrogen, or adjacent R" groups are joined together thereby forming a fused ring system,
X and X' each occurrence are C₁₋₁₀ hydrocarbyl or halide; and
Z is SiR*₂, CR*₂, SiR*₂SiR*₂, CR*₂CR*₂, CR*=CR*, CR*₂SiR*₂, BNR*₂, or GeR*₂, wherein R* independently each occurrence is C₁₋₄ alkyl or C₆₋₁₀ aryl, or optionally two R* groups are joined together.

9. A metal complex according to Claim 8 corresponding to the formula: 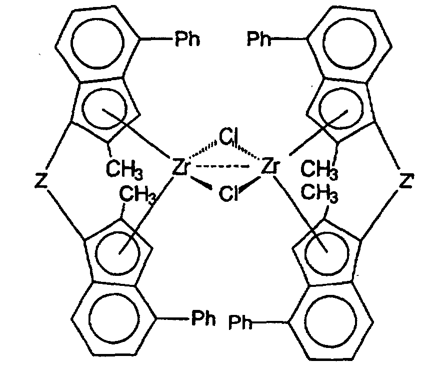 wherein:
Ph is phenyl, and
Z and Z' are each dimethylsilane, dimethylamidoborane or 1,2-ethanediyl.

10. A process for preparing a metal complex corresponding to the formula: 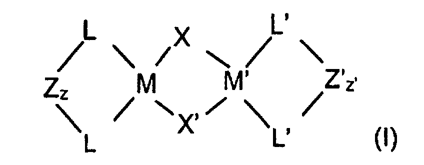 wherein:
L and L' independently each occurrence are ligand groups containing delocalized electrons by means of which said L and L' are π-bond to M or M' respectively,
M and M' are the same or different and are Group 4 metals in the +3 formal oxidation state,
Z and Z' are the same or different and are divalent bridging groups,
X and X' are the same or different and are anionic ligand groups, and
z and z' 1;
the steps of the process comprising reacting a dimeric reagent compound corresponding to the formula: 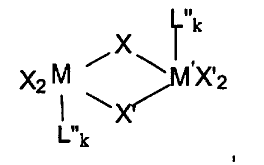
wherein
M, M', X, and X' are as previously defined,
L" is a Lewis base, and
k is a number from 0 to 3
with two equivalents of a metallated ligand corresponding to the formula:
MeL-Z-LMe, or MeL'-Z'-L'Me,
wherein,
L, L', Z, and Z' are as previously defined, and
Me is an alkali metal or Grignard.

11. A process according to Claim 10 wherein dimeric reagent compound is prepared by a process comprising contacting in any order, in an inert diluent, and optionally in the presence of a Lewis base, a Group 4 metal complex corresponding to the formula, MX₄, MX₄ (L)ₖ (or mixtures with compounds of the formula: M'X'₄ or M'X'₄ (L)ₖ) with a reducing agent.

12. An addition polymerization process wherein an addition polymerizable monomer is contacted under polymerization conditions with a catalyst **characterized in that** the catalyst comprises a metal complex according to Claim 1 and a cocatalyst.

13. A polymerization process according to Claim 12 wherein the metal complex is as defined in any one of Claims 2 to 9.

14. A polymerization process according to Claim 12 or Claim 13 wherein the cocatalyst is an alumoxane.

15. A polymerization process according to any one of Claims 12 to 14 wherein the process is a solution, slurry or gas-phase olefin polymerization process for producing ethylene homopolymers and copolymers of ethylene and a C₃₋₈ α-olefin comonomer.

16. A polymerization process according to any one of Claims 12 to 14 wherein the process is for preparing isotactic polypropylene.

## Patentansprüche

1. Dimere Metallocenverbindung eines Gruppe-4-Metalls entsprechend der Formel: 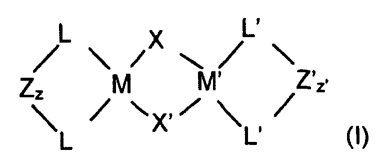 worin:
L und L' unabhängig voneinander bei jedem Auftreten Ligandengruppen sind, die delokalisierte Elektronen enthalten, durch welche dieses L und L' an M bzw. M' π-gebunden sind,
M und M' gleich oder unterschiedlich sind und Gruppe-4-Metalle in der formalen Oxidationsstufe +3 sind,
Z und Z' gleich oder unterschiedlich sind und divalente verbrückende Gruppen sind,
X und X' gleich oder unterschiedlich sind und anionische Ligandengruppen sind und
z und z' gleich 1 sind.

2. Metallkomplex nach Anspruch 1, worin L und L' eine Cyclopentadienyl-, Indenyl-, Fluorenyl-, Tetrahydroindenyl-, Tetrahydrofluorenyl-, Octahydrofluorenyl-, Pentadienyl-, Cyclohexadienyl-, Dihydroanthracenyl-, Hexahydroanthracenyl-, Decahydroanthracenyl-, Indacenyl-, s-Indacenyl-, gem-Dimethylacenaphthalenyl-, Cyclopenta(7)phenanthrenyl-, Phosphol- oder Boratabenzol gruppe oder ein C₁₋₂₀-hydrocarbyl-, C₁₋₂₀-dihydrocarbylamido-, C₁₋₂₀-hydrocarbylenamido-, C₁₋₂₀-halogenhydrocarbyl -, C₁₋₂₀-amido- oder C₁₋₂₀-hydrocarbylsilylsubstituiertes Derivat derselben sind.

3. Metallkomplex nach Anspruch 2, worin sowohl L als auch L' 2-Methyl-4-phenylinden-1-yl sind.

4. Metallkomplex nach einem der vorstehenden Ansprüche, worin Z und Z' divalente Gruppen entsprechend der folgenden Formeln sind: 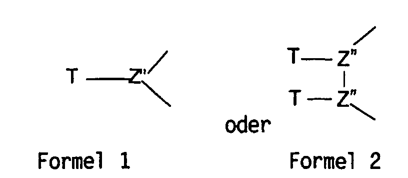 worin:
Z" gleich Bor oder Aluminium ist;
T unabhängig voneinander bei jedem Auftreten 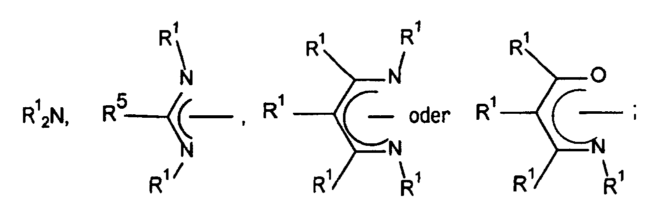 ist,
R¹ unabhängig voneinander bei jedem Auftreten Wasserstoff, eine Hydrocarbylgruppe, eine Trihydrocarbylsilylgruppe oder eine Trihydrocarbylsilylhydrocarbylgruppe ist, wobei diese R¹-Gruppen bis zu 20 Atome, Wasserstoff nicht mitgezählt, enthalten und zwei solcher R¹-Gruppen optional miteinander verbunden sein können, um eine Ringstruktur auszubilden, und
R⁵ gleich R¹ oder N(R¹)₂ ist.

5. Metallkomplex nach einem der vorstehenden Ansprüche, worin Z und Z' aus Gruppen entsprechend der Formel BNR'"₂) oder (ER'''₂)ᵣ ausgewählt sind, worin
E gleich Kohlenstoff, Silicium oder Germanium ist,
R"' unabhängig voneinander bei jedem Auftreten Wasserstoff oder eine Gruppe, ausgewählt aus Silyl, Hydrocarbyl, Hydrocarbyloxy und Kombinationen daraus, ist oder zwei R'''-Gruppen zusammen ein Ringsystem bilden, wobei dieses R''' bis zu 30 Atome, die nicht Wasserstoff sind, aufweist, und
r eine ganze Zahl von 1 bis 8 ist.

6. Metallkomplex nach Anspruch 5, worin R''' unabhängig voneinander bei jedem Auftreten Wasserstoff, Methyl, Methoxy. Benzyl, t-Butyl oder Phenyl ist.

7. Metallkomplex nach Anspruch 5, worin sowohl Z als auch Z' bei jedem Auftreten Dimethylsilandiyl, Dimethylamidoboran oder 1,2-Ethandiyl sind.

8. Metallkomplex nach Anspruch 1, entsprechend der Formel: 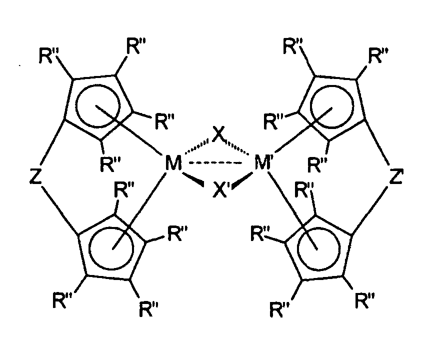 worin:
sowohl M als auch M' Zirconium oder Hafnium sind;
R" bei jedem Auftreten unabhängig voneinander ausgewählt ist aus Wasserstoff, Hydrocarbyl, Silyl, Halogenhydrocarbyl, N,N-Dialkylamino und Alkandiylamino, wobei dieses R" bis zu 20 Atome, Wasserstoff nicht mitgezählt, aufweist oder benachbarte R"-Gruppen miteinander verbunden sind und dabei ein anelliertes Ringsystem bilden,
X und X' bei jedem Auftreten C₁₋₁₀-Hydrocarbyl oder Halogenid sind und
Z gleich SiR*₂, CR*₂, SiR*₂SiR*₂, CR*₂CR*₂, CR*=CR*, CR*₂SiR*₂, BNR*₂ oder GeR*₂ ist, worin R* unabhängig voneinander bei jedem Auftreten C₁₋₄-Alkyl oder C₆₋₁₀-Aryl ist oder optional zwei R*-Gruppen miteinander verbunden sind.

9. Metallkomplex nach Anspruch 8 entsprechend der Formel: 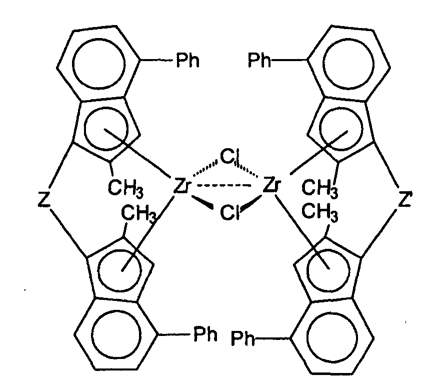 worin:
Ph gleich Phenyl ist und
Z und Z' jeweils Dimethylsilan, Dimethylamidoboran oder 1,2-Ethandiyl sind.

10. Verfahren zur Herstellung eines Metallkomplexes entsprechend der Formel: 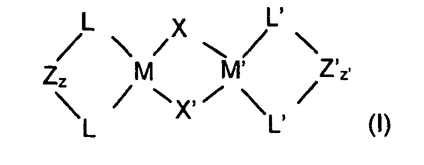 worin:
L und L' unabhängig voneinander bei jedem Auftreten Ligandengruppen sind, die delokalisierte Elektronen enthalten, durch welche dieses L und L' an M bzw. M' π-bebunden sind,
M und M' gleich oder unterschiedlich sind und Gruppe-4-Metalle in der formalen Oxidationsstufe +3 sind,
Z und Z' gleich oder unterschiedlich sind und divalente verbrückende Gruppen sind,
X und X' gleich oder unterschiedlich sind und anionische Ligandengruppen sind und
z und z' gleich 1 sind,
wobei die Schritte des Verfahrens Umsetzen einer dimeren Reagenzverbindung entsprechend der Formel: 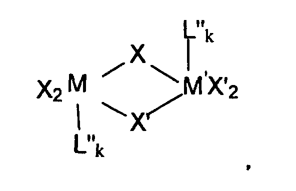 worin:
M, M', X und X' wie zuvor definiert sind,
L" eine Lewis-Base ist und
k eine Zahl von 0 bis 3 ist,
mit zwei Äquivalenten eines metallierten Liganden entsprechend der Formel: MeL-Z-LMe oder MeL'-Z'-L'Me,
worin:
L, L', Z und Z' wie zuvor definiert sind und
Me ein Alkalimetall oder ein Grignardrest ist, umfassen.

11. Verfahren nach Anspruch 10, worin die dimere Reagenzverbindung durch ein Verfahren hergestellt wird, umfassend Inberührungbringen in beliebiger Reihenfolge eines inerten Verdünnungsmittels und optional in Gegenwart einer Lewis-Base, eines Gruppe-4-Metallkomplexes entsprechend der Formel: MX₄, MX₄(L)ₖ (oder Mischungen von Verbindungen der Formel: M'X'₄ oder M'X'₄(L)ₖ) mit einem Reduktionsmittel.

12. Additionspolymerisationsverfahren, worin ein additionspolymerisierbares Monomer unter Polymerisationsbedingungen mit einem Katalysator in Berührung gebracht wird, **dadurch gekennzeichnet, dass** der Katalysator einen Metallkomplex nach Anspruch 1 und einen Cokatalysator enthält.

13. Polymerisationsverfahren nach Anspruch 12, worin der Metallkomplex wie in einem der Ansprüche 2-9 definiert ist.

14. Polymerisationsverfahren nach Anspruch 12 oder 13, worin der Cokatalysator ein Alumoxan ist.

15. Polymerisationsverfahren nach einem der Ansprüche 12-14, worin das Verfahren ein Lösungs-, Aufschlämmungs- oder Gasphasenolefinpolymerisationsverfahren zur Herstellung von Ethylenhomopolymeren und Copolymeren von Ethylen und einem C₃₋₈-α-Olefincomonomer ist.

16. Polymerisationsverfahren nach einem der Ansprüche 12-14, worin das Verfahren zur Herstellung von isotaktischem Polypropylen dient.

## Revendications

1. Composé métallocène dimère de métaux du Groupe 4 correspondant à la formule : 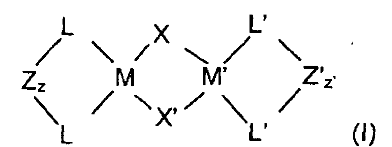 dans laquelle :
chaque L et L' est indépendamment un groupe ligand contenant des électrons délocalisés au moyen desquels lesdits L et L' sont liés par des liaisons-π respectivement avec M ou M',
M et M' sont identiques ou différents et sont des métaux du Groupe 4 à l'état d'oxydation formel +3,
Z et Z' sont identiques ou différents et sont des groupes pontants divalents,
X et X' sont identiques ou différents et sont des groupes ligand anioniques, et
z et z' valent 1.

2. Complexe métallique selon la revendication 1, dans lequel L et L' représentent un groupe cyclopentadiényle, indényle, fluorényle, tétrahydroindényle, tétrahydrofluorényle, octahydrofluorényle, pentadiényle, cyclohexadiényle, dihydroanthracényle, hexahydroanthracényle, décahydroanthracényle, indacényle, s-indacényle, gemdiméthylacénaphtalényle, cyclopenta (λ) phénanthrényle, phosphole ou boratabenzène ou l'un de leurs dérivés à substitution hydrocarbyle en C₁₋₂₀, dihydrocarbylamido en C₁₋₂₀, hydrocarbylèneamido en C₁₋₂₀, halogénohydrocarbyle en C₁₋₂₀, amido en C₁₋₂₀ ou hydrocarbylsilyle en C₁₋₂₀.

3. Complexe métallique selon la revendication 2, dans lequel L et L' sont tous deux le 2-méthyl-4-phénylindén-1-yle.

4. Complexe métallique selon l'une quelconque des revendications précédentes, dans lequel Z et Z' sont des groupes divalents correspondant aux formules suivantes : 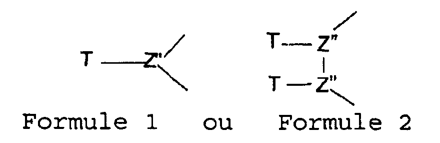 dans lesquelles :
Z" est le bore ou l'aluminium ;
chaque T est indépendamment : 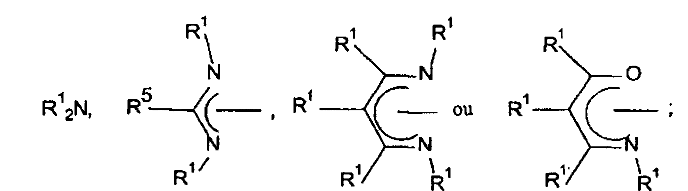
chaque R¹ est indépendamment l'hydrogène, un groupe hydrocarbyle, un groupe trihydrocarbylsilyle ou un groupe trihydrocarbylsilylhydrocarbyle, lesdits groupes R¹ contenant jusqu'à 20 atomes sans compter l'hydrogène, et deux de ces groupes R¹ peuvent éventuellement être reliés entre eux pour former une structure cyclique ; et
R⁵ est R¹ ou N(R¹)₂.

5. Complexe métallique selon l'une quelconque des revendications précédentes, dans lequel Z et Z' sont choisis parmi les groupes correspondants à la formule BNR"'2 ou (ER"'₂)ᵣ, dans laquelle
E est le carbone, le silicium ou le germanium,
chaque R"' est indépendamment l'hydrogène ou un groupe choisi parmi les groupes silyle, hydrocarbyle, hydrocarbyloxy et leurs combinaisons, ou deux groupes R"' forment ensemble un système cyclique, ledit R"' comprenant jusqu'à 30 atomes autres que l'hydrogène,
et r est un nombre entier de 1 à 8.

6. Complexe métallique selon la revendication 5, dans lequel chaque R"' est indépendamment l'hydrogène, un groupe méthyle, méthoxy, benzyle, tert-butyle ou phényle.

7. Complexe métallique selon la revendication 5, dans lequel chaque Z et Z' sont tous deux le diméthylsilanediyle, le diméthylamidoborane ou le 1,2-éthanediyle.

8. Complexe métallique selon la revendication 1, correspondant à la formule : 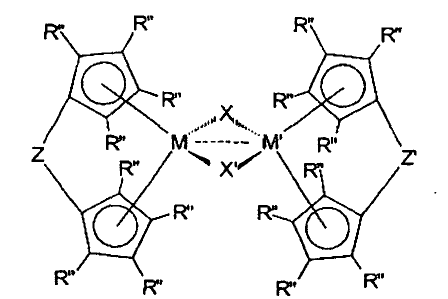 dans laquelle :
M et M' sont tous deux le zirconium ou l'hafnium ;
chaque R" est indépendamment choisi parmi l'hydrogène, un groupe hydrocarbyle, silyle, halogénohydrocarbyle, N,N-dialkylamino et alcanediylamino, ledit R" comprenant jusqu'à 20 atomes, sans compter l'hydrogène, ou des groupes R" adjacents sont reliés entre eux, formant ainsi un système à noyaux condensés,
chaque X et X' est un hydrocarbyle en C₁₋₁₀ ou un halogénure ; et
Z est SiR*₂, CR*₂, SiR*₂SiR*₂, CR*₂CR*₂, CR*=CR*, CR*₂SiR*₂, BNR*₂ ou GeR*₂, où chaque R* est indépendamment un alkyle en C₁₋₄ ou un aryle en C₆₋₁₀, ou éventuellement deux groupes R* sont reliés entre eux.

9. Complexe métallique selon la revendication 8, correspondant à la formule : 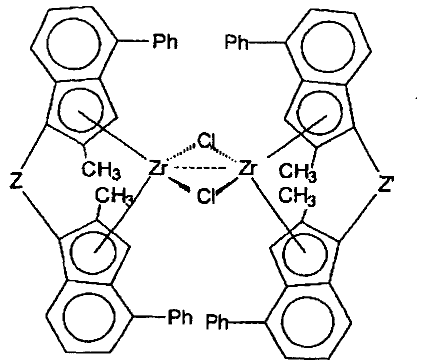 dans laquelle :
Ph est un phényle, et
Z et Z' sont chacun le diméthylsilane, le diméthylamidoborane ou le 1,2-éthanediyle.

10. Procédé de préparation d'un complexe métallique correspondant à la formule : 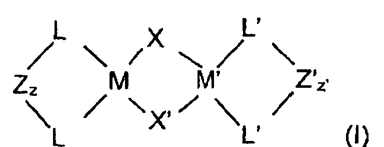 dans laquelle :
chaque L et L' est indépendamment un groupe ligand contenant des électrons délocalisés au moyen desquels lesdits L et L' sont liés par des liaisons-π avec respectivement M ou M',
M et M' sont identiques ou différents et sont des métaux du Groupe 4 à l'état d'oxydation formel +3,
Z et Z' sont identiques ou différents et sont des groupes pontants divalents,
X et X' sont identiques ou différents et sont des groupes ligand anioniques et Z et Z' valent 1 ;
les étapes du procédé comprenant la mise en réaction d'un composé réactif dimère correspondant à la formule : 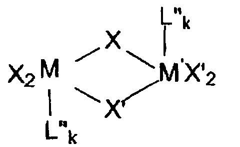
dans laquelle
M, M', X et X' sont tels que précédemment définis,
L" est une base de Lewis, et
k est un nombre de 0 à 3,
avec deux équivalents d'un ligand métallé correspondant à la formule :
MeL-Z-LMe, ou MeL'-Z'-L'Me,
dans laquelle,
L, L', Z et Z' sont tels que précédemment définis, et
Me est un métal alcalin ou Grignard.

11. Procédé selon la revendication 10, dans lequel le composé réactif dimère est préparé par un procédé comprenant la mise en contact, dans n'importe quel ordre, dans un diluant inerte, et éventuellement en présence d'une base de Lewis, d'un complexe de métaux du Groupe 4 correspondant à la formule MX₄, MX₄(L)ₖ (ou les mélanges avec les composés de formule : M'X'₄ ou M'X'₄(L)ₖ) avec un agent réducteur.

12. Procédé de polymérisation par addition dans lequel un monomère polymérisable par addition est mis en contact dans des conditions de polymérisation avec un catalyseur, **caractérisé en ce que** le catalyseur comprend un complexe métallique selon la revendication 1 et un co-catalyseur.

13. Procédé de polymérisation selon la revendication 12, dans lequel le complexe métallique est tel que défini dans l'une quelconque des revendications 2 à 9.

14. Procédé de polymérisation selon la revendication 12 ou la revendication 13, dans lequel le co-catalyseur est un alumoxane.

15. Procédé de polymérisation selon l'une quelconque des revendications 12 à 14, dans lequel le procédé est un procédé de polymérisation d'oléfine en solution, en suspension épaisse ou en phase gazeuse pour la production d'homopolymères d'éthylène et de copolymères d'éthylène et d'un comonomère d'α-oléfine en C₃₋₈.

16. Procédé de polymérisation selon l'une quelconque des revendications 12 à 14, dans lequel le procédé est pour la préparation de . polypropylène isotactique.
